# EUROPÄISCHE PATENTANMELDUNG

(11) **EP 1 825 746 A1**
(43) Veröffentlichungstag der Anmeldung: **29.08.2007**
(21) Anmeldenummer: 07405005.5
(22) Anmeldetag: 08.01.2007
(51) Int. Cl.: A01G 9/02

(54) **Vase zur Kultivierung von Orchideen**

(30) Priorität: 28.02.2006 CH 3122006
(71) Anmelder: Schubiger Kunstgewerbe AG, 8640 Rapperswil (CH)
(72) Erfinder: Schubiger, Gottfried, 8640 Rapperswil (CH)
(74) Vertreter: Feldmann, Clarence Paul

(57) **Zusammenfassung**

Es wird eine Vase beschrieben, die aus einem Glaskörper besteht, der von einem Vasenfuss (10) ausgehend durch eine Vasenaussenwand (12) gebildet wird und von der Vasenaussenwand (12) in einen Wulstscheitel (14) und anschliessend in einen Wulstrand (15) übergeht und dadurch eine Vasenwulst (13) bildet, die in eine Vasenöffnung (11) mündet. Der Glaskörper ist mit einer Nährlösung (4) gefüllt in die ein Kulturmedium (3) eintaucht, auf welchem Wurzeln (20) einer Orchidee (2) haften. Durch die spezielle Form der Vasenwulst (13) und den beinahe vollständigen Verschluss der Vasenöffnung (11) durch die Wurzeln (20) und Blätter (22) entsteht innerhalb des Glaskörpers ein Klima, das dem natürlichen Lebensraum der Orchideen nachempfunden ist. Die Verwendung von Holzkohle (3) als Kulturmedium (3) führt dazu, dass die Orchidee nur selten mit Nährlösung (4) versorgt werden muss und ein Verfaulen der Wurzeln (20) verhindert werden kann.

## Beschreibung

### Technisches Gebiet

Die vorliegende Erfindung ist eine Vase zur Kultivierung von Orchideen, umfassend einen Glaskörper mit einer Mittelachse, der einen Vasenfuss und eine Vasenaussenwand, die in eine Vasenöffnung mündet, einschliesst, der zur Aufnahme einer Nährlösung und eines porösen Kulturmediums geeignet ist, auf welchem eine Orchidee haftet.

### Stand der Technik

In den letzten Jahrzehnten wurde die Orchideenkultur immer populärer, das Angebot und die Verfügbarkeit von Kulturhybriden wurde grösser und so versuchten sich auch immer mehr Amateure daran, in den heimischen Zimmern, Vitrinen und Gewächshäusern Orchideen zu kultivieren. Vor allem der Massenproduktion von Orchideen in Taiwan, Thailand und den Niederlanden ist es zu verdanken, dass durchschnittlich mehrere Orchideen pro Haushalt anzutreffen sind.

Orchideen sind in der Regel mehrjährig, könnten also theoretisch je nach Wuchsform unbegrenzt gedeihen. Dies ist nur bei optimalen Bedingungen, was die Luftfeuchtigkeit, die Lichteinstrahlung und die Nährstoffversorgung angeht, möglich.

Es besteht ein grosses Bedürfnis bei den Orchideenliebhabern den natürlichen Lebensraum nachzuahmen, damit eine optimale Versorgung der Orchideen und damit eine lange Lebensdauer gewährleistet ist.

Orchideen wachsen auf verschiedene Art und Weise. Epiphytisch, nennt man das Wachstum von Orchideen auf anderen Pflanzen, wobei die Orchideen keine Schmarotzer sind. Auch terrestrisch, also auf der Erde und lithophytisch, auf Felsen oder Steinen wachsen einige Orchideenarten. Gemeinsam ist Ihnen, dass Sie Luftwurzeln bilden, über welche Flüssigkeit und Nährstoffe aufgenommen werden und die nicht in Erde oder Humus eingegraben werden.

Am häufigsten werden in den Läden epiphytische Orchideen angeboten. Diese sind meist in einfachen Kunststofftöpfen, mit einem Kulturmedium, dem Medium auf dem die Orchideen mit ihren Wurzeln haften, erhältlich. Zur Simulation des natürlichen Lebensraumes der Orchideen, werden diese meist auf Holzspäne, kleinen Ästen oder Rindenstücken platziert, wodurch lebende Baumäste nachgeahmt werden. In letzter Zeit sind auch Kulturmedien aus porösem Ton, geschäumtem Polystyrol oder Kokosfasern erhältlich.

Um den natürlichen Lebensraum der Orchideen möglichst genau nachzuahmen, muss für ein feucht-warmes Klima in der Nähe der Pflanze gesorgt werden. Während die höheren Temperaturen kein grosses Problem darstellen, muss die. Orchidee, je nach Absorptionsvermögen des verwendeten Kulturmediums, häufig mit Wasser und von Zeit zu Zeit auch mit Nährstoffen versorgt werden.

Es hat sich gezeigt, dass die relative Luftfeuchtigkeit zwischen 40% und 80% betragen muss, damit sich die Orchideen wohl fühlen. Dies ist vor allem in den Wintermonaten in den teilweise völlig überheizten Wohnräumen in Europa nicht einfach zu bewerkstelligen, da diese austrocknen und bei Wohnungen mit Doppelverglasung kann die relative Luftfeuchtigkeit oftmals auf 20% sinken.

Die Orchidee reichlich zu giessen ist keine Lösung zur Erreichung des gewünschten Feuchtigkeitsniveaus. Durch die niedrige relative Feuchtigkeit in der Raumluft verdunsten die Orchideen sehr viel Wasser durch ihre Blätter, wodurch ständig nachgegossen werden muss, ohne das dabei die Luftwurzeln im Wasser liegen sollen.
In den bislang verwendeten Aufbewahrungsbehältern und Vasen hält sich die Orchidee in der Art mit ihren Wurzeln an dem verwendeten Kulturmedium fest, dass die Wurzeln grösstenteils freiliegen und die Wurzeloberfläche ungehindert Luftfeuchtigkeit der Umgebung aufnehmen kann. Dadurch verlieren die Pflanzen nicht nur durch ihre Blattoberflächen Feuchtigkeit sondern auch durch ihre Wurzeln.

Hinzukommt, dass die bisher verwendeten Kulturmedien, wie Holz- und Rindenstücke, sowie Ton und künstlich hergestellte Materialien dazu neigen, zu verfaulen, zu verrotten und von Pilzen befallen zu werden, wenn sie sich in einem feuchten Milieu befinden.

### Darstellung der Erfindung

Die vorliegende Erfindung hat sich zur Aufgabe gestellt eine Vase zu schaffen, in welcher Orchideen, an ihren natürlichen Lebensraum angepasst, gedeihen können, wobei ein minimaler Aufwand an Bewässerung und sonstiger Pflege nötig ist.

Diese Aufgaben erfüllt eine Vorrichtung mit den Merkmalen des Patentanspruches 1.
Weitere vorteilhafte Ausgestaltungsformen sind in den abhängigen Ansprüchen zu finden.

### Kurze Beschreibung der Zeichnungen

Die Erfindung wird nachstehend im Zusammenhang mit den Zeichnungen beschrieben.

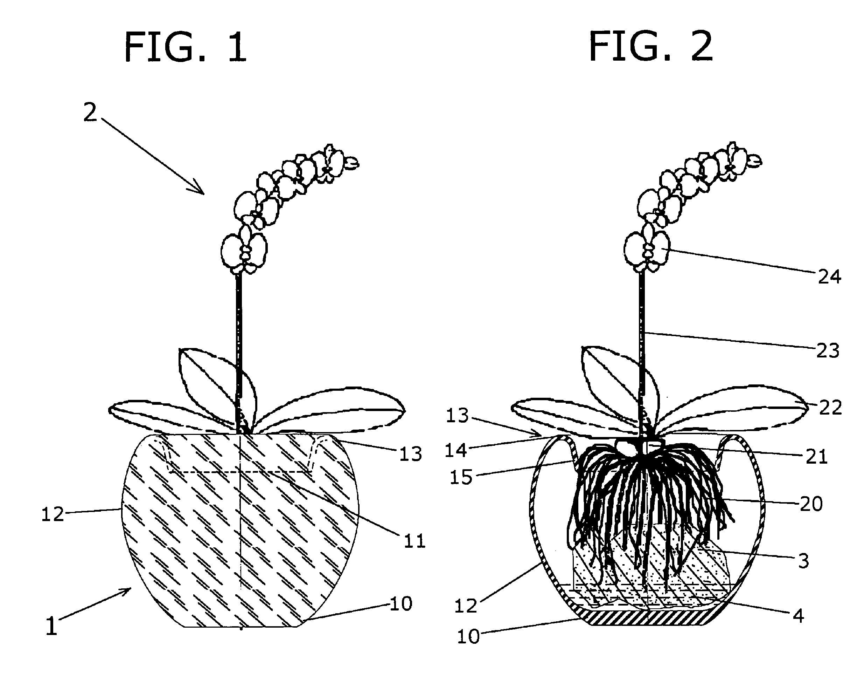

- Figur 1: zeigt eine Aufsicht auf die erfindungsgemässe Vase mit einer Orchidee.
- Figur 2: zeigt einen Schnitt durch die erfindungsgemässe Vase samt Kulturmedium und Nährlösung und einer in der Vase platzierten Orchidee.
- Figur 3: zeigt einen Schnitt durch den Glaskörper im Detail.

Die vorliegende Erfindung ist eine Vase zur Kultivierung von Orchideen, insbesondere epiphytisch wachsenden Orchideen 2, die aus einem Glaskörper 1 besteht, welcher von einem Vasenfuss 10 ausgehend von einer Vasenaussenwand 12 gebildet wird.
Die Vasenaussenwand 12 bildet, dem Vasenfuss 10 gegenüberliegend, eine Vasenwulst 13. Diese Vasenwulst 13 wird von einem horizontal oder parabelförmig verlaufenden Wulstscheitel 14 gebildet, der in einen Wulstrand 15 mündet. Am, zum Vasenfuss 10 weisenden, Ende des Wulstrandes 15 ist eine Vasenöffnung 11 angeordnet.

Der so geformte Glaskörper 1 bildet einen lichtdurchlässigen und wasserdichten Behälter, in den eine Orchidee 2, bestehend aus jeweils einer oder mehreren Wurzeln 20, Pseudobulben 21, Blättern 22, Rispen 23 und Blüten 24. Die Wurzeln 20 werden in Kontakt mit einem Flüssigkeit absorbierenden und porösen Kulturmedium 3 gebracht, auf welchem die Orchidee 2 Halt findet. Mit dem Kulturmedium 3 und den daran anliegenden Wurzeln 20 voran wird die Orchidee 2 durch die Vasenöffnung 11 in den Glaskörper 1 eingebracht und auf dem Vasenfuss 10 ruhend platziert.

Der Durchmesser der Vasenöffnung 11 muss so gewählt werden, dass die auf dem Kulturmedium 3 haftenden Wurzeln 20 und die Pseudobulben 21 durch die Vasenöffnung 11 hindurchgeführt werden können, so dass nur die Blätter 22, die Rispe 23 und die Blüten 24 über den Wulstscheitel 14 aus dem Glaskörper 1 herausragen können. Die Wurzeln 20 und je nach Orchideenart vorhandene Pseudobulben 21, die zur Speicherung von Wasser und Nährstoffen dienen befinden sich dann innerhalb des Glaskörpers 1. Die meist knäulförmigen Wurzeln 20 und die Pseudobulben 21 schliessen den Innenraum des Glaskörpers 1 ab, so dass nur noch wenig Luft und Feuchtigkeit durch die Vasenöffnung 11 ausgetauscht werden kann. Die Blätter 22 der Orchidee 2 legen sich zusätzlich über den Vasenwulst, wodurch der Glaskörper 1 zusätzlich abgedichtet wird. Die Form der Vasenwulst 13 und die innerhalb des Glaskörpers 1 liegenden Teile der Orchidee 2, die Wurzeln 20 und die Pseudobulben 21 schaffen damit ein beinahe abgeschlossenes Volumen, in dem sich das für die Orchideen 2 günstige Klima erzeugen lässt.

Betrachtet man eine Mittelachse 16 des Glaskörpers 1, so haben Versuche gezeigt, dass der Wulstrand 15 und die Mittelachse 16 einen Winkel α einschliessen sollten, der grösser Null und kleiner als 90° sein sollte. Dann ist die Wölbung der Vasenwulst 13 so ausgebildet, dass das Innere des Glaskörpers 1 optimal von den Wurzeln 20 und den Pseudobulben 21 abgeschlossen wird und sich damit ein spezielles Klima innerhalb des Glaskörpers 1 ausbilden kann.

In ihrem natürlichen Lebensraum sind Orchideen 2 häufig auf Bäumen zu finden, um möglichst viel Licht, auch über ihre Wurzeln 20, aufzunehmen. Neben der Aufnahme von Wasser und Nährstoffen haben die Wurzeln 20 noch die Aufgabe Photosynthese zu betreiben. Um diesen Prozess zu unterstützen und dabei zu vermeiden, dass die Wurzeln 20 aus der Vase herauswachsen, wird die Vase als Glaskörper 1 ausgebildet.

Den Glaskörper 1 füllt man mit einer Nährlösung 4, so dass das Kulturmedium 3 befeuchtet ist, welches auf Grund seiner Absorptionseigenschaften Flüssigkeit aufnimmt. Die Wurzeln 20 der Orchidee 2 nehmen wiederum Nährlösung 4 auf. Bei der Befüllung ist darauf zu achten, dass der Flüssigkeitspegel nicht so hoch steigt, dass die Wurzeln 20 in die Flüssigkeit ragen. Die Nährlösung kann Wasser sein. Dieses Wasser kann unbehandeltes oder enthärtetes Leitungswasser sein. Da Orchideen 2 in ihrem natürlichen Lebensraum nur wenig Nährstoffe zugeführt bekommen, ist es für den Orchideenliebhaber ratsam äusserst sparsam zu düngen. Von Zeit zu Zeit kann die Nährlösung mit einem in Fachgeschäften erhältlichen Orchideendünger versetzt werden.

Versuchsreihen haben gezeigt, dass Holzkohle 3 ein ideales Kulturmedium 3 ist. Dieses Gemisch aus organischen Verbindungen mit einem sehr hohen Kohlenstoffanteil bildet poröse Stücke mit einer geringen Dichte. Die Stücke der Holzkohle 3 sind ohne Werkzeug portionierbar und können individuell für jede Orchidee 2 angepasst werden. Wegen der mikroskopisch kleinen Kanäle weist Holzkohle ein hohes Absorptionsvermögen auf, da die Poren eine grosse Menge Flüssigkeit aufnehmen können. Dadurch ist eine ausreichende Feuchtigkeitsversorgung ohne hohen Giessaufwand erreichbar. Holzkohle wird bislang zum Klären und Entfärben von Flüssigkeiten, zum Desinfizieren und zum Konservieren von fäulnisfähigen Substanzen eingesetzt. In den Versuchsreihen hat sich gezeigt, dass Holzkohle 3 ein Verrotten und Faulen von Wurzeln 20 verhindert und sogar das Abheilen von Wunden an den Wurzeln 20 fördert.

Das, dem natürlichen Lebensraum einer Orchidee 2 nachempfundene Klima entsteht im Glaskörper 1 in folgender Weise.
Der Vasenfuss 10 des Glaskörpers 1 nimmt Wärme über die ihn umgebende Luft auf, so dass sich der Vasenfuss 10 aufheizt, wodurch auch die Temperatur der Nährlösung 4 steigt. Die Holzkohle 3 absorbiert Wärme, da Lichtstrahlung von aussen durch den Glaskörper 1 ungehindert auf die Holzkohle einfallen kann. Diese Effekte führen dazu, dass entlang der Mittelachse 16 ein Temperaturgradient entsteht. Durch die Wärme im Bereich des Vasenfusses 10 verdunstet Wasser 4 aus dem Volumen der Nährlösung 4 und aus den Poren der Holzkohle 3 und es steigt ein Luft-Wasserdampf-Gemisch nach oben in Richtung der Vasenöffnung 11. Durch die oben beschriebene Form der Vasenwulst 13 in Kombination mit der Anordnung der Wurzeln 20, der Pseudobulben 21 und der Blätter 22 der Orchidee 2 kann nur wenig Luft aus der Vasenöffnung 11 entweichen.

Durch den Temperaturgradienten herrschen tiefer Temperaturen in der Nähe der Vasenöffnung 11, nicht zuletzt durch die auftretende Verdunstungskälte auf der Oberfläche der Wurzeln 20. Durch die tieferen Temperaturen kondensiert der Wasserdampf in der Nähe der Vasenöffnung 11 am Glaskörper 1 und an den Wurzeln 20 und den Pseudobulben 21, wodurch die Orchidee 2 feucht gehalten, aber nicht durchnässt wird.

In dem nicht von Wurzeln 20 erreichten Volumen innerhalb des Glaskörpers 1 bildet sich eine Luft-Wasserdampf-Strömung aus. Warme und feuchte Luft steigt nach oben, wo sie nicht entweichen kann und der Wasserdampf darum kondensiert und sich die Luft dabei wieder abkühlt und in Richtung des Vasenfusses 10 sinkt.

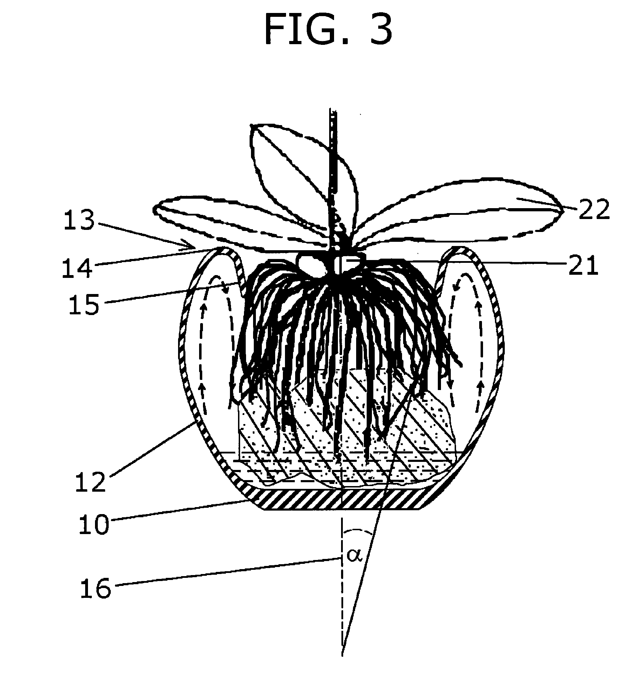

Die, von den Wurzeln 10 abgegebene Feuchtigkeit kann nicht aus dem Glaskörper 1 entweichen und wird den Wurzeln 20 wieder zugeführt. Dieser Kreislauf ist in Figur 3 durch Pfeile angedeutet und führt dazu, dass die Nährlösung 4 weniger schnell verdunstet und darum in grösseren Abständen nachgefüllt werden muss, nämlich erst, wenn die Verdunstung der Feuchtigkeit aus den Blättern 22, der Rispe 23 und den Blüten 24 stattgefunden hat.

Da die Benutzung von Holzkohle 3 als Kulturmedium das Faulen der Wurzeln 20 verhindert und desinfizierend wirkt, ist es möglich das Umtopfen der Orchidee 2 zu verzögern, wenn nicht sogar zu vermeiden.

### Bezugszeichenliste

- 1: Glaskörper
10 Vasenfuss
11 Vasenöffnung
12 Vasenaussenwand
13 Vasenwulst
14 Wulstscheitel
15 Wulstrand
16 Mittelachse
- 2: Orchidee
20 Wurzel
21 Pseudobulbe
22 Blatt
23 Rispe
24 Blüte
- 3: Kulturmedium = Holzkohle
- 4: Nährlösung = Wasser

## Patentansprüche

1. Vase zur Kultivierung von Orchideen, umfassend einen Glaskörper (1) mit einer Mittelachse (16), der einen Vasenfuss (10) und eine Vasenaussenwand (12), die in eine Vasenöffnung (11) mündet, einschliesst, der zur Aufnahme einer Nährlösung (4) und eines porösen Kulturmediums (3) geeignet ist, auf welchem eine Orchidee (2) haftet, **dadurch gekennzeichnet, dass** die Vasenaussenwand (12) eine Vasenwulst (13) oberhalb der Mündung in die Vasenöffnung (11) umfasst, die einen Wulstscheitel (14) und einen, in einem gegebenen Winkel zur Mittelachse (16) des Glaskörpers (1) verlaufenden, Wulstrand (15) einschliesst.

2. Vase nach Anspruch 1, **dadurch gekennzeichnet, dass** der Winkel α zwischen dem Wulstrand (15) und einer Mittelachse (16) des Glaskörpers (1) grösser als Null und kleiner als 90° ist.

3. Vase nach Anspruch 1, **dadurch gekennzeichnet, dass** der Wulstscheitel (14) horizontal verläuft.

4. Vase nach Anspruch 1, **dadurch gekennzeichnet, dass** der Wulstscheitel (14) parabelförmig verläuft.

5. Vase nach Anspruch 1, **dadurch gekennzeichnet, dass** der Glaskörper (1) mit einem Kulturmedium (3) bestückt ist.

6. Vase nach Anspruch 5, **dadurch gekennzeichnet, dass** das Kulturmedium (3) Holzkohle ist.

7. Verwendung der Vase nach Anspruch 1, **dadurch gekennzeichnet, dass** die Vasenöffnung (11) für Pseudobulben (21) und Wurzeln (20) einer Orchidee (2) passierbar ist.

8. Verwendung der Vase nach Anspruch 7, **dadurch gekennzeichnet, dass** die Wurzeln (20) und Blätter (22) der Orchidee (2) oberhalb des Wulstscheitels (14) liegen und damit einen Luftaustausch der Luft im Glaskörper (1) mit der Umgebung weitgehend verhindern.
